# EUROPEAN PATENT SPECIFICATION

(11) **EP 0 682 902 B1**
(45) Date of publication and mention of the grant of the patent: **13.01.1999**
(21) Application number: 94670006.9
(22) Date of filing: 19.10.1994
(51) Int. Cl.: A47J 31/06

(54) **Back-pressure filter, to prepare cream coffee**
Gegen-Drück Filter, zum Bereiten von Kaffee Creme
Filtre à pression opposée, destiné à préparer du café crème

(30) Priority: 11.03.1994 PT 898794
(43) Date of publication of application: 22.11.1995
(73) Proprietor: BRIEL - INDUSTRIA DE ELECTRODOMESTICOS, S.A., Custio, Matosinhos (PT)
(72) Inventor: Marques Ribeiro, Valdemar, Estrada Exterior da, P-4450 Matosinhos (PT)
(74) Representative: Sousa da Silva Lourenço, Ludgero

(56) References cited:
- EP-A- 0 264 352
- EP-A- 0 459 323
- DE-A- 4 129 814

## Description

The present invention relates to a novel back-pressure filter, to be inserted in a standard filter support of pressurised water coffee machines for preparing cream coffee, independently from the grinding degree to which the coffee beans were formerly submitted.

There are several filters already known for coffee machines, from the simple bases (more common) to the double ones and those using a rubber ring with or without, a flat bar or helicoidal springs, all of them with the purpose of retaining the pressure, but so far the results obtained have not been too brilliant, because when the grinding degree is low, the known filters let the water pass quickly through the coffee without the consequent cream effect.

From German Patent DE-A-4129814, that relates to a filter according to the preamble of claim 1, it is known to use a spherical calotte shapped rubber ring, with a cilindrical hole in the middle, which is placed between the bottom part of a classic filter insert and the innermost bottom part of the filter support. This means that this filter support can be used without the spherical calotte rubber ring, thus only with the classic filter insert, because they are separated parts.

From EP 459323, another filter is known, that includes a classic filter insert in a filter support and between these is placed a plate sealed against the inner walls of the filter support by means of a ring, and whereby the cream coffee is formed thanks to the flexible action of a flat spring bar, which closes more or less a relative bore in said plate, all these parts being independent of the classic filter insert.

Those filters using rubber rings, or other peripheral parts, do it simply by depositing it on the bottom of the filter body, what provokes, very often, its fall into the container of coffee mass already used or even to the floor with the consequent disadvantages. Those with rubber, have it fixed (or just placed on) to the filter support.

The present description refers a novel filter to coffee-machines, that proposes a back-pressure filter according to claim 1.

Observing the annexed figures where, without any limitative character, one can see a preferred way of construction of the present invention, which will be described as follows:

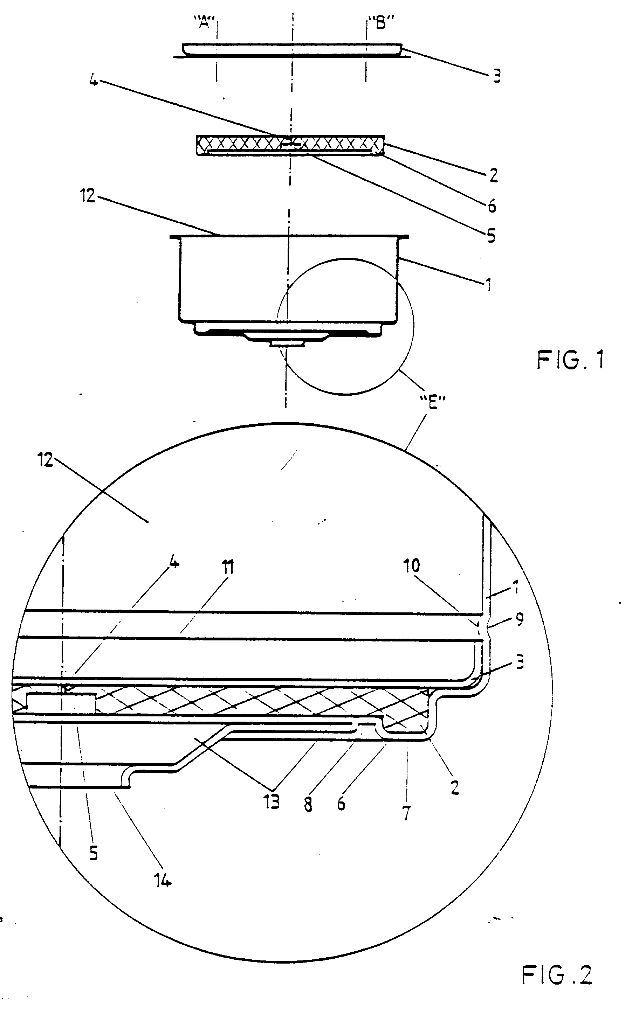

- Fig. 1 -: The filter with its composing parts, by order of fitting inside the filter body, with the rubber ring in cross-section along a diameter:
- Fig. 2 -: An exploded view in cross-section of the encircled part of Fig. 1;

The described filter consists mainly in a filter body (1) a silicone rubber ring (2) and a bored disk (3 ) with very small holes, in a circular area of diameter roughly limited by the straight lines "A" and "B".

The filter body (1) present an adequated external shape as well as dimensions, in order to be used in any common filter support, in the place of well known single filters.

The filter body (1) has a general cilindrical form presenting in its bottom face one outlet (14) made in a portion that projects out wardly in such way that arises a certain free volume (13), having a concentric circular groove (7) and protrusion (8), to receive the rubber ring (2).

The said rubber ring (2) has a circular and plan shape in rest position characterized to have on its upper surface a central hole (4) communicating with a coaxial recess (5) in its bottom of a larger than hole (4).

The bottom side of said rubber ring (2) further comprises a concentric and peripheral circular protrusion (6) which will be fitted into a circular groove (7) of the filter body (1) and set upon the inner circular protrusion (8) of the base or bottom side of the said filter body (1), which provide, to keep it in position, when its flexible central zone is deformed under pressure.

On the ring (2) positioned as above described, the bored disk (3) compresses the ring (2) to the innermost part of the body (1) and is thus retained in the inside of the filter body, which will be later used in the filter supports of coffee machines.

The bored disk (3) constituted by a metallic plan plate presents a little and peripheral edge (11) rising up, to increase its mechanical resistance, and is pre-bored by a very small holes, arranged in a circular area around its centre, with a diameter between "A" and "B".

During the filter fitting, the machine, that presses down the bored disk (3), against the rubber ring (2), produces around the outside of the filter body (1) one slight groove (9) which gives rise to a protrusion (10) on the innerside, which will fix peripherally and definitively the said disk (3) on its edge (11). So, all the constitutents parts of the present filter, remain as one piece.

The operation will be as follows, that is to say, as soon as the "filter" object of present description is put inside a common filter support of a coffee machine (under-pressure), and previously ground coffee is put, in the container part (12) of the filter body (1) and the filter support is applied to respective machine.

When the hot water under-pressure is turned on, it tends to pass through the ground coffee, but the detail of the rubber ring (2), which only has one little passage hole (4) and consequently lesser flowing capacity than the bored disk (3), the pressure forces the ring (2), duly fixed in its periphery (6,7,8), to deform itself, due to its intrincical elasticity, and it creates a back-pressure, that when deformed can occupy the free volume (13) immediately below, in the lower part of the filter body (1).

The coffee remaining, momentarily, in the area between the said disk (3) and the said ring (2) and passing through the central hole (4) of the ring (2), which presents little notches on the upper and lower sides, creates foam which increases, when the pressure decreases in the lower recess (5), even before said coffee passes through the outlet (14) to the cup(s) where it collects, giving rise to cream coffee.

## Claims

1. Back-pressure filter to be inserted in a standard filter support of a pressure coffee machine for preparing cream coffee comprising a cylindrical body (1) presenting a bottom face characterised in that the bottom face of said body (1) comprises a central outlet (14) projecting outwardly and a concentric circular groove (7) surrounding said outlet (14), in that the filter further comprises a rubber ring (2) presenting on its upper surface a central hole (4) communicating with a coaxial recess (5) in its bottom surface of a larger diameter than said hole (4), the bottom surface of said rubber ring (2) further comprising a concentric circular protusion (6) to fit into the circular groove (7) of said body (1) so as to retain the rubber ring (2) inside the body (1), and a bored disc (3) provided with holes arranged in a circular area around its centre, the bored disc (3) being peripherally fixed in the filter body (1) on top of the rubber ring (2) by means of a circular protusion (10) on the inner side wall of said filter body (1).

## Patentansprüche

1. Einer Gegendruck-Filter dass in einen üblich Filtergestell von eine Kaffeemachenddruck-Maschine für die einen Sahne-Kaffee Vorbereitung angeordnet ist und dass einer zylindrischer Körper (1) mit einen Unterflach, dadurch gekennzeichnet, dass das Unterflach von bettrefend Körper (1) einen zentral Ausgang (14) nach aussen erstreckend und einer konzentrisch kreisförmiger Nut (7) dass den darüber erwhänten Ausgang 14 umgibt aufweist, dass der Filter einen Gummi-Ring (2) der am seines Uberflasch einen Zentral-Börung (4) aufweist welches in Verbindung mit eine koaxiale Vertiefung (5) in seiner Unterflach ist und dass einen grösser Durchmesser auweist dann darüber erwhänt Börung (4), das Underflach von bettrefend Gummi-Ring (2) enthaltend noch einen kreisförmiger Vorsprung (6) zum einfügung im kreisförmiger Nut (7) vom darüber erwhänte Körper (1) um dem Gummi-Ring (2) innerhalb des Körpers (1) zu festhalten, und einen Durchgebohrt-Scheibe (3) mit in einer kreisförmiger Bereich seiner Zenter umgebend angeordneten Lochern versehen, und der Durchgebohrt-Scheibe (3) befestigt zu dein Filters Körper (1) oberhalb dem Gummi-Ting (2) einer kreisförmiger Vorsprung (10) an den Innenseite-Wand von bettrefend Filter Körper (1).

## Revendications

1. Filtre de contre-pression pour insertion dans un support de filtre standard d'une machine de café à pression pour la préparation de café crème, constitué par un corps cilindrique (1) lequel présente une face de fond charactérisée parce que la dite face de fond du corps (1) comprend un trou central de sortie (14) qui se projecte vers l'extérieur et une rainure annulaire concentrique (7) entourant le susdit passage (14), le filtre comprend en outre un anneau en cautchouc (2) lequel présente sur la surface supérieure un trou central (4) communiquant avec un évidement coaxial (5) sur sa surface inférieure d'un diamètre plus grand que celui du susdit trou (4), comprenant en outre la surface inférieure du susdit anneau de cautchouc (2) une projéction circulaire concentrique (6) pour raccordement dans la rainure circulaire (7) du susdit corps (1) de façon à retenir l'anneau de cautchouc (2) dans l'intérieur du corps (1), et un disque foreté (3) équipé de trous disposés périfèriquement fixés sur le corps du filtre (1) sus l'anneau de cautchouc (2) par intérmise d'une projéction circulaire (10) de la paroi latérale du susdit corps de filtre (1).
